# NEUE EUROPÄISCHE PATENTSCHRIFT

(11) **EP 1 812 200 B2**
(45) Veröffentlichungstag und Bekanntmachung des Hinweises auf die Entscheidung über den Einspruch: **20.06.2018**
(45) Hinweis auf die Patenterteilung: 13.05.2009
(21) Anmeldenummer: 05701326.0
(22) Anmeldetag: 03.02.2005
(51) Int. Cl.: B23K 37/00, B23K 9/10

(54) **VORRICHTUNG ZUR AUSFÜHRUNG EINES FÜGE-, TRENN- ODER OBERFLÄCHENBEHANDLUNGSVERFAHRENS, INSBESONDERE EINES SCHWEISSVERFAHRENS**
DEVICE FOR CARRYING OUT A JOINT, SEPARATION OR SURFACE TREATMENT PROCESS IN PARTICULAR A WELDING PROCESS
DISPOSITIF POUR LA MISE EN OEUVRE D'UN PROCEDE DE TRAITEMENT DE SURFACE, D'ASSEMBLAGE OU DE SEPARATION, EN PARTICULIER D'UN PROCEDE DE SOUDAGE

(30) Priorität: 13.10.2004 DE 102004049957
(43) Veröffentlichungstag der Anmeldung: 01.08.2007
(73) Patentinhaber: ILHUNG Manufacturing Co., Ltd., Gangseo-gu Busan 618-818 (KR)
(72) Erfinder: Karakas, Erdogan, 30938 Burgwedel (DE)
(74) Vertreter: Groth & Co. KB
(86) Internationale Anmeldenummer: PCT/EP2005/001060
(87) Internationale Veröffentlichungsnummer: WO 2006/042572

(56) Entgegenhaltungen:
- EP-A- 0 677 353
- DE-A1- 3 543 681
- GB-A- 2 167 990
- US-A1- 2003 116 540

## Beschreibung

Die Erfindung betrifft eine Vorrichtung der im Oberbegriff des Anspruchs 1 genannten Art zur Ausführung eines Schweißverfahrens.

Derartige Vorrichtungen sind in Form von Schweißvorrichtungen allgemein bekannt und dienen beispielsweise zur Durchführung von Lichtbogen-Schweißverfahren.

Wird beispielsweise mittels eines Lichtbogen-Schweißverfahrens eine Schweißaufgabe ausgeführt, die darin besteht, beispielsweise bei der Herstellung eines Behälters ohne Aussetzen des Lichtbogens eine zusammenhängende Schweißnaht zu bilden, die einen horizontalen Nahtabschnitt aufweist (Wannenposition), an den sich ein vertikal verlaufender Nahtabschnitt (Steigposition), danach wiederum ein horizontal verlaufender Nahtabschnitt (Überkopfposition) und schließlich wiederum ein vertikal verlaufender Nahtabschnitt (Fallposition) anschließt, der an den zuerst gebildeten horizontal verlaufenden Nahtabschnitt anschließt, so ist es erforderlich, daß ein die Schweißvorrichtung bedienender Werker die Lage des Schweißkopfes während des Schweißvorganges relativ zu den zu verschweißenden Werkstücken ändert.

Hierbei ist es unter Umständen wünschenswert oder erforderlich, Werte von Kenngrößen des Schweißverfahrens an die jeweilige Lage des Schweißkopfes anzupassen. Beispielsweise ist es wünschenswert, die Stromstärke des Schweißstromes in der Überkopfposition des Brenners zu verringern, um zu verhindern, daß flüssiges Material der zu verschweißenden Werkstücke bzw. eines Schweißdrahtes herabtropft. Ferner kann es beispielsweise wünschenswert sein, in der Steigposition und der Fallposition die Stromstärke des Schweißstromes ebenfalls zu verringern, um so der Tatsache Rechnung zu tragen, daß in der Steigposition und der Fallposition der Schweißkopf meist mit einer geringeren Geschwindigkeit relativ zu den zu verschweißenden Werkstücken bewegt wird als in der Wannenposition.

Zu diesem Zweck ist es bekannt, über eine an der Schweißvorrichtung vorgesehene Bedieneinrichtung unterschiedliche Schweißprogramme anzuwählen, in denen den Kenngrößen des Schweißverfahrens, beispielsweise der Amplitude des Schweißstromes vorbestimmte Werte zugeordnet sind.

Ein Nachteil dieser bekannten Schweißvorrichtung besteht darin, daß die Wahl des jeweils zutreffenden Schweißprogrammes durch den Werker erfolgen muß, was in der Praxis dazu geführt hat, daß der Werker aus Gründen der Zeitersparnis und Bequemlichkeit möglicherweise sämtliche Teile einer Schweißaufgabe mit demselben Schweißprogramm ausführt, um das Umschalten zwischen den Schweißprogrammen zu vermeiden. Da ein Schweißprogramm stets nur für einen Teil der Schweißaufgabe, beispielsweise das Schweißen in Wannenposition, optimiert sein kann, führt dies in der Praxis dazu, daß die Qualität der Schweißnaht im Vergleich zu einer Schweißnaht, die unter Verwendung des jeweils optimierten Schweißprogrammes für jeden Nahtabschnitt gebildet worden ist, verschlechtert ist.

Der Erfindung liegt die Aufgabe zugrunde, eine Vorrichtung der im Oberbegriff des Anspruchs 1 genannten Art anzugeben, die den Nachteil der bekannten Vorrichtung nicht aufweist, bei der also die Qualität der Arbeitsergebnisse bei der Durchführung des Schweißverfahrens erhöht ist, und die einfach und bequem bedienbar ist.

Diese Aufgabe wird durch die im Anspruch 1 angegebene Lehre gelöst.

Der Grundgedanke der Lehre besteht in Bezug auf eine Schweißvorrichtung bei der die Schweißenergie über einen Schweißstrom bzw. eine Schweißspannung bereitgestellt wird darin, die Lage des Schweißkopfes und/oder Lageänderungen des Schweißkopfes relativ zu einer Bezugslage des Arbeiskopfes und/oder einem Bezugspunkt im Raum und/oder den zu verschweißenden Werkstücken durch Sensormittel abzufühlen. Auf diese Weise können die Kenngrößen des Schweißverfahrens oder wenigstens eine dieser Kenngrößen in Abhängigkeit von der abgefühlten Lage und/oder Lageänderung hinsichtlich ihrer Werte beeinflußt werden. Insbesondere können den Kenngrößen des Schweißverfahrens Werte zugeordnet werden, die an die jeweilige Schweißaufgabe angepaßt sind. Die Zuordnung der Werte erfolgt hierbei in Abhängigkeit von der abgefühlten Lage und/oder Lageänderungen des Schweißkopfes aus der bzw. aus denen sich ergibt, welche Schweißaufgabe jeweils auszuführen ist. Die in Abhängigkeit von einer durch die Sensormittel abgefühlten Lage und/oder Lageänderung des Schweißkopfes beeinflußbaren Kenngrößen des Schweißverfahrens umfassen wenigstens die Amplitude und/oder
die Signalform, insbesondere Pulsform, und/oder
die Pulsmodulation des Schweißstromes und/oder der Schweißspannung.

Auf diese Weise ist beispielsweise die Bedienung der Schweißvorrichtung wesentlich vereinfacht und die Qualität der mittels der Schweißvorrichtung erzeugten Schweißverbindungen, also beispielsweise von Schweißpunkten oder Schweißnähten, wesentlich erhöht. Es kann beispielsweise in Abhängigkeit von einer abgefühlten Lageänderung des Schweißkopfes ein optisches oder akustisches Signal erzeugt werden, das dem Werker anzeigt, daß ein anderes Schweißprogramm zu wählen ist. Beispielsweise kann dann, wenn nach dem Bilden einer Schweißnaht in Wannenposition der Schweißkopf um etwa 90° gedreht wird, um beispielsweise in Steigposition zu schweißen, ein Signal erzeugt werden, das dem Werker anzeigt, daß nunmehr ein für das Schweißen in Steigposition optimiertes Schweißprogramm zu wählen ist.

Insbesondere und vorzugsweise kann die Beeinflussung von Kenngrößen des betreffenden Verfahrens hinsichtlich ihrer Werte, beispielsweise eines Schweißverfahrens jedoch auch automatisch erfolgen. Es sind Steuermittel vorgesehen, die anhand von Ausgangssignalen der Sensormittel die Lage des Schweißkopfes bzw. Lageänderungen des Schweißkopfes erkennen und in Abhängigkeit von der erkannten Lage bzw. Lageänderung Kenngrößen des Verfahrens hinsichtlich ihrer Werte beeinflussen. Auf diese Weise ist die Bedienung der erfindungsgemäßen Vorrichtung wesentlich vereinfacht und die Qualität von mittels einer Schweißvorrichtung erzeugten Schweißverbindungen wesentlich erhöht.

Unter einem Schweißkopf wird derjenige Teil einer Vorrichtung verstanden, über den während des Bearbeitungsvorganges auf die zu bearbeitenden Werkstücke eingewirkt, also beispielsweise während eines Schweißvorganges die Schweißenergie in die miteinander zu verschweißenden Werkstükke eingebracht wird. Bei einem Widerstands-Schweißverfahren kann der Schweißkopf beispielsweise durch eine Schweißzange gebildet sein, während er bei einem Lichtbogen-Schweißverfahren beispielsweise durch einen Brenner, an dem der Schweißdraht geführt ist, gebildet sein kann.

Unter einem Schweißvorgang wird der Vorgang der Bildung einer Schweißverbindung, also einer Schweißnaht verstanden.

Die vorgesehenen Sensormittel können entsprechend den jeweiligen Anforderungen die Lage und/oder Lageänderungen des Schweißkopfes relativ zu einer Bezugslage und/oder einem Bezugspunkt im Raum erfassen, wobei die Lageänderungen sowohl translatorische als auch rotative Lageänderungen sowie Kombinationen von translatorischen mit rotativen Lageänderungen sind.

Hierbei ist es möglich, daß Lageänderungen des Schweißkopfes während des Einwirkens auf ein und dasselbe Werkstück erfaßt werden. Es ist auch möglich, Lageänderungen zu erfassen, bei denen nach einer Lageänderung auf ein anderes Werkstück eingewirkt wird. Wird beispielsweise mittels einer Schweißvorrichtung eine Schweißaufgabe ausgeführt, die sich auf ein erstes Werkstück bezieht, so kann beispielsweise ein Wechsel zu einem anderen Werkstück durch die Sensormittel erfaßt und der Wert wenigstens einer Kenngröße des Schweißverfahrens an die in Bezug auf dieses Werkstück auszuführende Schweißaufgabe angepaßt werden, ggf. im Zusammenwirken mit einem manuellen Eingriff des Werkers, der beispielsweise die bei diesem Werkstück auszuführende Schweißaufgabe in die Vorrichtung eingibt.

Es ist anhand der Ausgangssignale der Sensormittel auch möglich, die Erkennung, daß nach einer Lageänderung ein neues Werkstück zu bearbeiten ist, und die daraus resultierende Anpassung von Werten von Kenngrößen des Schweißverfahrens automatisch auszuführen, beispielsweise dann, wenn in einer vorbestimmten Reihenfolge unterschiedliche, räumlich voneinander getrennte Werkstücke zu bearbeiten sind, beispielsweise bei einer vorbestimmten Reihenfolge von in Vertikalrichtung zueinander beabstanden zu verschweißenden Werkstücken.

Die Vorrichtung ist besonders gut zur Ausführung beliebiger Schweißverfahren geeignet. Insbesondere und beispielsweise kann das Schweißverfahren ein Widerstands-Schweißverfahren, ein Lichtbogen-Schweißverfahren, insbesondere ein Schutzgas-Lichtbogen-Schweißverfahren sein.

Die erfindungsgemäße Lehre sieht mit den Sensormitteln verbundene Steuermittel zur selbsttätigen Steuerung und/oder Regelung wenigstens einer Kenngröße des Schweißverfahrens, in Abhängigkeit von der durch die Sensormittel abgefühlten Lage und/oder Lageänderungen des Schweißkopfes vor. Bei dieser Ausführungsform ist eine Steuerung bzw. Regelung wenigstens einer Kenngröße des Schweißverfahrens, in Abhängigkeit von der durch die Sensormittel abgefühlten Lage und/oder Lageänderung des Schweißkopfes ermöglicht, so daß die Bedienung der erfindungsgemäßen Vorrichtung besonders einfach gestaltet und die Qualität der Schweißverbindung weiter erhöht ist.

Die Vorrichtung ist als Schweißvorrichtung zur Ausführung eines Schweißverfahrens und der Schweißkopf zur Abgabe von Schweißenergie an die zu verschweißenden Werkstücke ausgebildet.

Die Beeinflussung von Werten von Kenngrößen des Schweißverfahrens, kann auf beliebige geeignete Weise erfolgen. Eine vorteilhafte Weiterbildung sieht vor, daß die Steuermittel mit einer den Schweißkopf mit Schweißenergie versorgenden Schweißenergie-Quelle zur Ansteuerung derselben verbunden sind, derart, daß wenigstens eine Kenngröße des Schweißverfahrens in Abhängigkeit von der durch die Sensormittel abgefühlten Lage und/oder Lageänderung des Schweißkopfes an der Schweißenergie-Quelle steuer- und/oder regelbar ist. Bei dieser Ausführungsform erfolgt die Steuerung bzw. Regelung von Kenngrößen des Schweißverfahrens an der Schweißenergie-Quelle.

Anzahl, Anordnung und konstruktive Gestaltung von Sensoren der Sensormittel sind in weiten Grenzen wählbar. Die erfindungsgemäße Lehre sieht vor, daß die Sensormittel wenigstens einen Sensor zum Abfühlen einer Rotationslage und/oder von rotativen Lageänderungen des Schweißkopfes aufweisen. Dabei ist durch den Sensor beispielsweise feststellbar, ob der Schweißkopf gedreht wird, um beispielsweise bei einer Schweißvorrichtung von einem Schweißen in Wannenposition auf ein Schweißen in Steigposition überzugehen.

Die erfindungsgemäße Lehre sieht weiter vor, daß die Sensormittel wenigstens einen Sensor zum Abfühlen translatorischer Lageänderungen des Schweißkopfes aufweisen. Bei dieser Ausführungsform ist durch den Sensor beispielsweise abfühlbar, ob sich der Schweißkopf translatorisch bewegt, beispielsweise beim Bilden einer Schweißnaht. Zum Abfühlen translatorischer Lageänderungen des Schweißkopfes können beliebige geeignete Sensoren bzw. Sensoranordnungen verwendet werden. Beispielsweise kann an dem Schweißkopf ein Ultraschallsender angeordnet sein, der Ultraschallwellen abstrahlt, die von einem ortsfesten Ultraschallempfänger empfangen werden. Aus der Laufzeit der Ultraschallwellen von dem Ultraschallsender und damit dem Schweißkopf zu dem Ultraschallempfänger kann dann der Abstand des Schweißkopfes von dem Ultraschallsender ermittelt werden. In hierzu entsprechender Weise können die Ultraschallwellen von zwei räumlich zueinander beabstandet angeordneten Ultraschallempfängern empfangen werden, so daß aufgrund der Abstandsänderung des Schweißkopfes zu jedem der beiden Ultraschallempfänger translatorische Lageänderungen des Schweißkopfes ermittelt werden können. Um Lageänderungen des Schweißkopfes im dreidimensionalen Raum eindeutig zu erfassen, können in hierzu entsprechender Weise drei räumlich zueinander beabstandete Ultraschallempfänger vorgesehen sein, so daß sich aus dem jeweiligen Abstand des Schweißkopfes von jedem der Ultraschallempfänger die Lage des Schweißkopfes im dreidimensionalen Raum bzw. Lageänderungen eindeutig erfassen läßt. Insbesondere translatorische Lageänderungen können auch beispielsweise mit optischen Sensormitteln erfaßt werden. Der Abstand des Schweißkopfes von einem Bezugspunkt ist beispielsweise mittels eines Laser-Interferometers ermittelbar. In hierzu entsprechender Weise sind translatorische Lageänderungen des Schweißkopfes über zwei voneinander unabhängige Laser-Interferometer und Lageänderungen des Schweißkopfes im dreidimensionalen Raum mittels dreier voneinander unabhängiger Laser-Interferometer erfaßbar.

Eine Weiterbildung der vorgenannten Ausführungsform sieht vor, daß der Sensor die Geschwindigkeit und/oder Beschleunigung einer translatorischen und/oder rotativen Bewegung des Schweißkopfes abfühlt. Auf diese Weise kann eine noch weitergehende Beeinflussung von Kenngrößen des Schweißverfahrens erfolgen. Beispielsweise kann bei einer Schweißvorrichtung die Amplitude des Schweißstromes in Abhängigkeit von der Geschwindigkeit, mit der sich der Schweißkopf beim Bilden einer Schweißverbindung über die miteinander zu verschweißenden Werkstücke bewegt, beeinflußt werden. Um beispielsweise die sogenannte Streckenenergie, also die pro Längeneinheit einer Schweißnaht in die zu verschweißenden Werkstücke eingebrachte Schweißenergie, konstant zu halten, kann beim Schweißen mit einer relativ geringen Geschwindigkeit des Schweißkopfes relativ zu den zu verschweißenden Werkstücken eine vorbestimmte Amplitude des Schweißstromes gewählt werden, während beim Erhöhen der Geschwindigkeit die Amplitude des Schweißstromes erhöht wird. Zum Abfühlen einer Beschleunigung des Schweißkopfes können beispielsweise Sensoren verwendet werden, wie sie unter den Bezeichnungen MMA 6260 Q, MMA 6261 Q, MMA 6262 Q und MMA 6263 Q von der Firma Freescale Semiconductor, Inc. Alma School Road Chandler, Arizona, USA (www.freescale.com), vertrieben werden.

Entsprechend den jeweiligen Anforderungen kann der Schweißkopf während des Bearbeitungsvorganges von Hand oder durch eine Handhabungseinrichtung, insbesondere einen Schweißroboter führbar sein.

Bei der Ausführungsform, bei der die Vorrichtung eine Schweißvorrichtung zur Durchführung eines Schweißverfahrens ist, kann das Schweißverfahren ein Widerstands-Schweißverfahren ein Lichtbogen-Schweißverfahren oder ein Schutzgas-Lichtbogen-Schweißverfahren.

Wird die erfindungsgemäße Schweißvorrichtung zur Ausführung eines Widerstands-Schweißverfahrens verwendet, so sieht eine vorteilhafte Weiterbildung der erfindungsgemäßen Schweißvorrichtung vor, daß die in Abhängigkeit von der durch die Sensormittel abgefühlten Lage bzw. Lageänderung des Schweißkopfes beinflußbaren Kenngrößen des Schweißverfahrens eine Anpreßkraft wenigstens einer Schweißelektrode des Schweißkopfes an eines der zu verschweißenden Werkstücke umfassen.

Eine vorteilhafte Weiterbildung einer erfindungsgemäßen Schweißvorrichtung, die zur Ausführung eines Lichtbogen-Schweißverfahrens, bei dem zusätzlicher Werkstoff in Form eines Schweißdrahtes zugeführt wird, verwendet wird, sieht vor, daß die in Abhängigkeit von der durch die Sensormittel abgefühlten Lage bzw. Lageänderungen des Schweißkopfes beeinflußbaren Kenngrößen des Schweißverfahrens eine Zuführgeschwindigkeit wenigstens eines an dem Schweißkopf geführten Schweißdrahtes umfassen.

Eine andere vorteilhafte Weiterbildung der erfindungsgemäßen Lehre sieht vor, daß die Vorrichtung ein Schweißbrenner ist.

Die Position eines Sensors oder von Sensoren der Sensormittel relativ zu dem Schweißkopf sind in beliebiger geeigneter Weise wählbar, solange sichergestellt ist, daß in der jeweils erforderlichen Weise die Lage bzw. Lageänderungen des Schweißkopfes erfaßt werden können. Um eine besonders genaue Erfassung der Lage bzw. von Lageänderungen des Schweißkopfes zu ermöglichen und zugleich einen konstruktiv einfachen Aufbau zu erreichen, sieht eine Weiterbildung der erfindungsgemäßen Lehre vor, daß wenigstens ein Sensor der Sensormittel an dem Schweißkopf angeordnet, insbesondere in den Schweißkopf integriert ist.

Erfindungsgemäß ist es jedoch auch möglich, daß wenigstens ein Sensor der Sensormittel am Körper eines die Vorrichtung benutzenden Werkers, insbesondere an dessen Hand oder Arm, tragbar ist, wie dies eine andere Weiterbildung der erfindungsgemäßen Lehre vorsieht.

Eine Bezugslage des Schweißkopfes kann bei der Herstellung der erfindungsgemäßen Vorrichtung bereits werksseitig vorgegeben sein. Beispielsweise kann die Bezugslage eine Lage sein, in der ein Schweißkopf so angeordnet ist, daß in Wannenposition, also unter Bildung einer im wesentlichen horizontal verlaufenden Schweißnaht, geschweißt wird. Eine vorteilhafte Weiterbildung der erfindungsgemäßen Lehre sieht jedoch vor, daß die Bezugslage des Schweißkopfes und/oder ein Bezugspunkt im Raum durch einen Werker und/oder durch die Steuermittel wählbar ist. Bei dieser Ausführungsform ist es insbesondere möglich, die Bezugslage an die Gegebenheiten der jeweiligen Schweißaufgabe bzw. einen die Schweißvorrichtung benutzenden Werker anzupassen.

Eine Weiterbildung der vorgenannten Ausführungsform sieht vor, daß die Steuermittel in Abhängigkeit von der gewählten Bezugslage und/oder der durch die Sensormittel abgefühlten Lage und/oder von Lageänderungen des Schweißkopfes den Kenngrößen des Schweißverfahrens vorbestimmte Werte zuordnen. Bei dieser Ausführungsform können den Kenngrößen des Schweißverfahrens beispielsweise Werte entsprechend einer Kennlinie zugeordnet sein. Beispielsweise können beim Verschweißen von Blechen einer bestimmten Dicke dem Schweißen in der Wannenposition, dem Schweißen in der Steigposition, dem Schweißen in der Überkopfposition und dem Schweißen in der Fallposition jeweils ein Satz von Werten der Kenngrößen zugeordnet sein. Es ist jedoch auch möglich, die Zuordnung von Werten zu den Kenngrößen des Schweißverfahrens in Abhängigkeit von einem Kennlinienfeld vorzunehmen. So können den Kenngrößen beispielsweise Werte in Abhängigkeit von dem Material und/oder der Dicke der miteinander zu verschweißenden Werkstücke zugeordnet werden.

Die erfindungsgemäße Lehre sieht vor, daß die Steuermittel Kenngrößen des Schweißverfahrens während des Schweißvorganges selbsttätig steuern bzw. regeln. Die Steuerung bzw. Regelung der Kenngrößen kann zeitlich bzw. räumlich, bezogen beispielsweise auf eine Schweißnaht, kontinuierlich erfolgen.

Eine andere Weiterbildung der erfindungsgemäßen Lehre sieht eine Anzeigeeinrichtung zur Anzeige eines durch die Steuermittel in Abhängigkeit von Ausgangssignalen der Sensormittel gewählten Betriebsmodus der Vorrichtung vor. Bei dieser Ausführungsform kann ein Betriebsmodus der Vorrichtung, beispielsweise ein durch die Steuermittel gewähltes Schweißprogramm, durch die Anzeigeeinrichtung angezeigt werden, so daß der Werker darüber informiert ist, mit welchem Schweißprogramm er jeweils schweißt. Darüber hinaus ermöglicht die Anzeige des jeweiligen Betriebsmodus es dem Werker, die Funktionsweise der Sensormittel und der Steuermittel auf Plausibilität zu prüfen und so beispielsweise Störungen zu erkennen.

Grundsätzlich ist es besonders vorteilhaft, wenn eine Beeinflussung von Kenngrößen des Schweissverfahrens selbsttätig durch Steuermittel erfolgt, so daß kein manueller Eingriff durch den Werker erforderlich und gleichzeitig sichergestellt ist, daß die Vorrichtung sich stets in einem geeigneten Betriebsmodus befindet, bei einer Schweißvorrichtung also mit einem an die jeweilige Lage des Schweißkopfes angepaßten Schweißprogramm geschweißt wird. Falls zusätzlich zu einer selbsttätigen Beeinflussung von Kenngrößen des Schweissverfahrens durch die Steuermittel ein manueller Eingriff durch den Werker zugelassen werden soll, sieht eine vorteilhafte Weiterbildung der erfindungsgemäßen Lehre eine Bedieneinrichtung zur manuellen Auswahl eines Betriebsmodus der Vorrichtung vor. Diese Ausführungsform ist auch dann besonders vorteilhaft, wenn eine Beeinflussung der zu beeinflussenden Kenngrößen nicht vollautomatisch durch die Steuermittel erfolgt, sondern dem Werker in Abhängigkeit von Ausgangssignalen der Sensormittel angezeigt wird, daß ein anderer Betriebsmodus der Vorrichtung, bei einer Schweißvorrichtung, ein anderes Schweißprogramm zu wählen ist, die Auswahl des Betriebsmodus, infolge derer die Kenngrößen des Verfahrens beeinflusst werden, jedoch manuell durch einen Werker erfolgt.

Die erfindungsgemäßen Lehre sieht vor, daß die Steuermittel die Kenngröße bzw. Kenngrößen so beeinflussen, daß das Verfahren unterbrechungsfrei durchführbar ist. Bei dieser Ausführungsform erfolgt beispielsweise bei einem Lichtbogen-Schweißverfahren die Beeinflussung der Kenngrößen und damit die Auswahl eines geeigneten Betriebsmodus in einer Weise, daß ohne Aussetzen des Lichtbogens geschweißt werden kann. Wesentlich ist in diesem Zusammenhang, daß eine Beeinflussung von Werten der Kenngrößen so schnell erfolgt, daß beispielsweise bei einer Schweißvorrichtung beim Übergang von der Wannenposition in die Steigposition jeweils mit den an die jeweilige Schweißposition angepaßten Werten der Kenngrößen gearbeitet wird.

Bei der vorgenannten Ausführungsform können die Steuermittel die Kenngröße bzw. die Kenngrößen zeitkontinuierlich beeinflussen, wie dies Weiterbildungen der erfindungsgemäßen Lehre vorsehen.

Eine andere Weiterbildung der erfindungsgemäßen Lehre sieht vor, daß unterschiedlichen Lagen des Schweißkopfes unterschiedliche Werte wenigstens einer Kenngröße zugeordnet werden und daß die Steuermittel der jeweiligen Kenngröße in Abhängigkeit von der durch die Sensormittel abgefühlten Lage des Schweißkopfes einen Wert zuordnen.

Eine andere Weiterbildung der erfindungsgemäßen Lehre sieht vor, daß wenigstens einer ersten Lage des Schweißkopfes ein erster Wert wenigstens einer Kenngröße und wenigstens einer zweiten Lage des Schweißkopfes ein zweiter Wert der Kenngröße oder der Kenngrößen zugeordnet ist und daß die Steuermittel der Kenngröße den ersten Wert zuordnen, wenn ein Ausgangssignal der Sensormittel anzeigt, daß sich der Schweißkopf in der ersten Lage befindet, und daß die Steuermittel der Kenngröße den zweiten Wert zuordnen, wenn ein Ausgangssignal der Sensormittel anzeigt, daß sich der Schweißkopf in der zweiten Lage befindet.

Die Erfindung wird nachfolgend anhand der beigefügten Zeichnung näher erläutert, in der Ausführungsbeispiele einer erfindungsgemäßen Schweißvorrichtung dargestellt sind.

Es zeigt:
Fig. 1 : ein stark schematisiertes Blockschalt- bild eines ersten Ausführungsbeispieles einer Vorrichtung in Form einer Schweißvorrichtung zur Durch- führung eines Lichtbogen-Schweißverfah- rens,
Fig. 2 : in gleicher Darstellung wie Fig. 1 ein zweites Ausführungsbeispiel einer erfindungsgemäßen Schweißvorrichtung,
Fig. 3 : stark schematisiert ein Ausführungsbei- spiel eines Sensors zur Erfassung der Drehlage bzw. von rotativen Lageänderun- gen des Schweißkopfes der Schweißvor- richtung gemäß Fig. 1 ,
Fig. 4 : stark schematisiert ein zweites Ausfüh- rungsbeispiel eines Sensors zur Erfas- sung einer Drehlage bzw. von rotativen Lageänderungen des Schweißkopfes,
Fig. 5 : den Schweißkopf beim Schweißen in Wan- nenposition in einer ersten Drehlage,
Fig. 6 : in gleicher Darstellung wie Fig. 5 den Schweißkopf beim Schweißen in Wannenpo- sition in einer zweiten Drehlage,
Fig. 7 : den Schweißkopf beim Schweißen in Steig- position in einer ersten Drehlage,
Fig. 8 : den Schweißkopf beim Schweißen in Steig- position in einer zweiten Drehlage,
Fig. 9 : den Schweißkopf beim Schweißen in Über- kopfposition,
Fig. 10 : ein Kennlinienfeld zur Zuordnung von Werten der Kenngrößen und
Fig. 11 : eine stark schematisierte Darstellung eines aus mehreren miteinander zu ver- schweißenden Blechen bestehenden Behäl- ters zur Erläuterung eines erfindungs- gemäßen Verfahrens.

In den Figuren der Zeichnung sind gleiche bzw. sich entsprechende Bauteile mit den gleichen Bezugszeichen versehen.

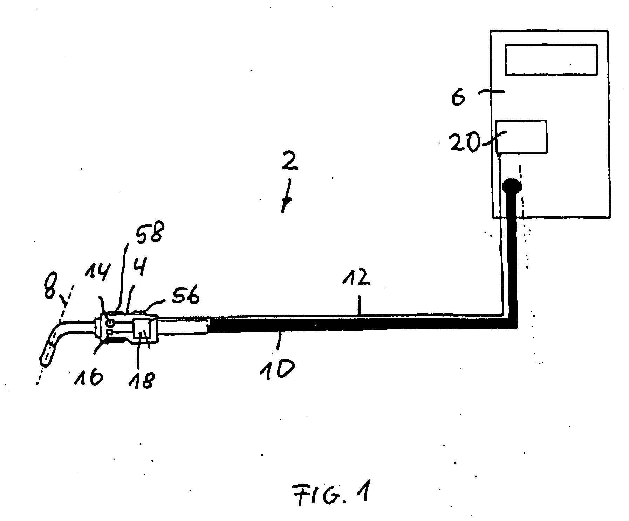

In Fig. 1 ist ein erstes Ausführungsbeispiel einer Vorrichtung in Form einer Schweißvorrichtung 2 dargestellt, die bei dieser Ausführungsform zur Durchführung eines Lichtbogen-Schweißverfahrens ausgebildet ist und einen als Schweißbrenner ausgebildeten Schweißkopf 4 zur Abgabe von Schweißenergie an zu verschweißende Werkstücke aufweist. Zur Versorgung des Schweißkopfes 4 mit Schweißenergie ist eine Schweißenergie-Quelle 6 vorgesehen, die dem Schweißkopf 4 einen Schweißstrom zuführt. Der Schweißstrom fließt durch einen in Fig. 1 durch eine gestrichelte Linie 8 angedeuteten Schweißdraht, der dem Schweißkopf 4 während des Schweißvorganges kontinuierlich zugeführt wird und bei dem Lichtbogen-Schweißverfahren eine Elektrode bildet, wobei beim Bilden einer Schweißverbindung, beispielsweise einer Schweißnaht, ein Lichtbogen zwischen dem Schweißdraht 8 und den zu verschweißenden Werkstücken brennt. Der Schweißstrom wird dem Schweißkopf 4 über eine Versorgungsleitung 10 zugeführt. Zur Übermittlung von Steuersignalen von dem Schweißkopf 4 zu der Quelle 6 ist eine Steuerleitung 12 vorgesehen.

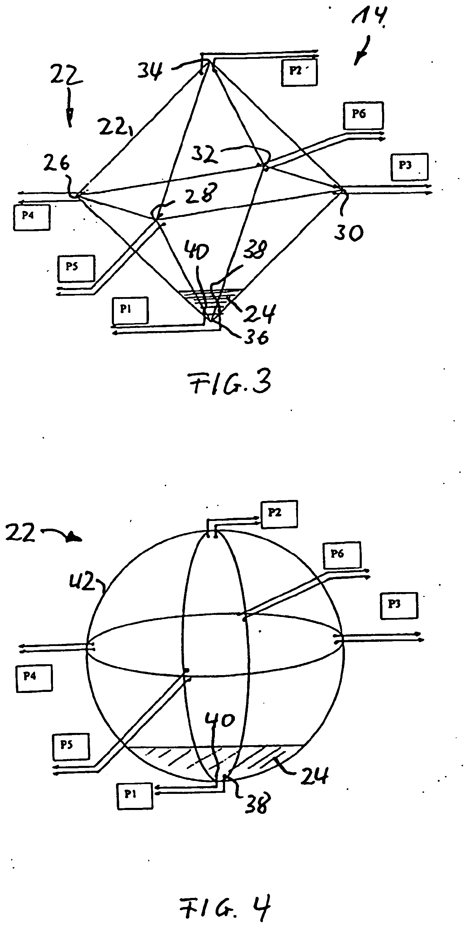

Die Schweißvorrichtung 2 weist Sensormittel zum Abfühlen der Lage bzw. von Lageänderungen des Schweißkopfes 4 relativ zu einer Bezugslage des Schweißkopfes 4 und/oder zu den zu verschweißenden Werkstücken auf, derart, daß wenigstens eine Kenngröße des Schweißverfahrens in Abhängigkeit von der abgefühlten Lage und/oder Langeänderungen beeinflußbar ist. Die Sensormittel weisen bei diesem Ausführungsbeispiel einen ersten Sensor 14 zum Abfühlen einer Rotationslage und/oder von rotativen Lageänderungen des Schweißkopfes 4 auf, der weiter unten anhand der Figuren 3 und 4 näher erläutert wird.

Die Sensormittel weisen bei diesem Ausführungsbeispiel ferner einen zweiten Sensor 16 auf, der translatorische Bewegungen sowie die Geschwindigkeit und/oder Beschleunigung einer translatorischen Bewegung des Schweißkopfes abfühlt.

Die Sensoren 14, 16 sind bei diesem Ausführungsbeispiel in den Schweißkopf integriert. Die Schweißvorrichtung 2 weist ferner mit den Sensoren 14, 16 verbundene Steuermittel zur selbsttätigen Steuerung und/oder Regelung wenigstens einer Kenngröße des Schweißverfahrens in Abhängigkeit von der durch die Sensoren 14, 16 abgefühlten Lage und/oder Lageänderungen des Schweißkopfes 4 auf. Die Steuermittel weisen bei diesem Ausführungsbeispiel eine Steuereinheit 18 auf, wobei Ausgangssignale der Sensoren 14, 16 Eingangssignale der Steuereinheit 18 bilden, deren Ausgangssignale einem in die Quelle 6 integrierten Steuergerät 20 zugeführt werden, das in Abhängigkeit von den Ausgangssignalen der Steuereinheit 18 Kenngrößen des Schweißverfahrens, insbesondere die Amplitude eines von der Quelle 6 an den Schweißkopf 4 gelieferten Schweißstromes steuert oder regelt.

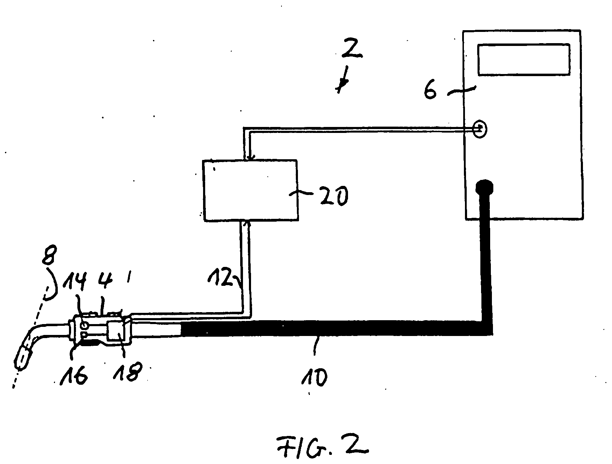

In Fig. 2 ist ein zweites Ausführungsbeispiel einer Schweißvorrichtung 2 dargestellt, das sich von dem Ausführungsbeispiel gemäß Fig. 1 dadurch unterscheidet, daß das Steuergerät 20 nicht in die Quelle 6 integriert ist, sondern als separates Steuergerät ausgebildet ist.

In Fig. 3 ist stark schematisiert die Funktionsweise des ersten Sensors 14 veranschaulicht. Der erste Sensor 14 weist ein als Hohlkörper ausgebildetes Gehäuse 22 auf, das bei diesem Ausführungsbeispiel im wesentlichen die Form eines regulären Oktaeders hat, in dessen Innerem eine geringe Menge Quecksilbers 24 aufgenommen ist. Im Bereich jeder der Spitzen 26, 28, 30, 32, 34, 36 des Oktaeders ist ein Paar von elektrischen Kontakten angeordnet, von denen in Fig. 1 lediglich ein Paar von Kontakten mit den Bezugszeichen 38, 40 versehen ist. Sammelt sich das Quecksilber 24 beispielsweise im Bereich der Spitze 36 des Gehäuses 22, so stellt es eine elektrisch leitende Verbindung zwischen den Kontakten 38 und 40 her, so daß zwischen den Kontakten 38, 40 beispielsweise ein Steuerstrom fließen kann, aufgrund dessen die Steuereinheit 18 erkennt, daß sich das Quecksilber 24 im Bereich der Spitze 36 gesammelt hat. Auf diese Weise ist in der Steuereinheit 18 feststellbar, daß sich das Gehäuse 24 in der in Fig. 1 dargestellten Drehlage befindet. Da der erste Sensor 14 drehfest an dem Schweißkopf 4 angeordnet ist, ist auf diese Weise erkennbar, daß sich der Schweißkopf 4 in der in Fig. 1 dargestellten Position befindet.

Wird der Schweißkopf 4 aus dieser Position um eine senkrecht zur Zeichenebene verlaufende Drehachse um 90° in Fig. 1 im Uhrzeigersinn gedreht, so sammelt sich das Quecksilber 24 im Bereich der Spitze 30 und stellt eine elektrisch leitende Verbindung zwischen den dieser Spitze 30 zugeordneten Kontakten her, so daß zwischen diesen Kontakten ein Steuerstrom fließen kann. Auf diese Weise ist durch die Steuereinheit 18 feststellbar, daß sich das Gehäuse 22 und damit auch der Schweißkopf 4 in einer gegenüber Fig. 1 bzw. Fig. 3 um 90° im Uhrzeigersinn gedrehten Drehlage befindet. In hierzu entsprechender Weise sind beliebige Änderungen der Drehlage des Gehäuses 22 und damit des Schweißkopfes 4 um alle drei Achsen im Raum erkennbar.

Die Anordnung von Paaren von Kontakten 38, 40 an den Spitzen 26, 28, 30, 32, 34, 36 des Gehäuses ist lediglich beispielhaft zu verstehen. Um die Erkennung von Lageänderungen genauer zu gestalten, können zusätzliche Paare von Kontakten 38, 40 vorgesehen sein.

Darüber hinaus kann unter Beibehaltung des Grundprinzips des in Fig. 3 dargestellten ersten Sensors 14 dessen Gehäuse 20 auch anders ausgebildet sein, beispielsweise als Kugel 42, wie in Fig. 4 dargestellt. Durch entsprechende Wahl der Anzahl und Anordnung der Paare von elektrischen Kontakten 38, 40 ist eine besonders genaue Erkennung von Änderungen der Drehlage des Gehäuses 22 des ersten Sensors 14 und damit des Schweißkopfes 4 ermöglicht.

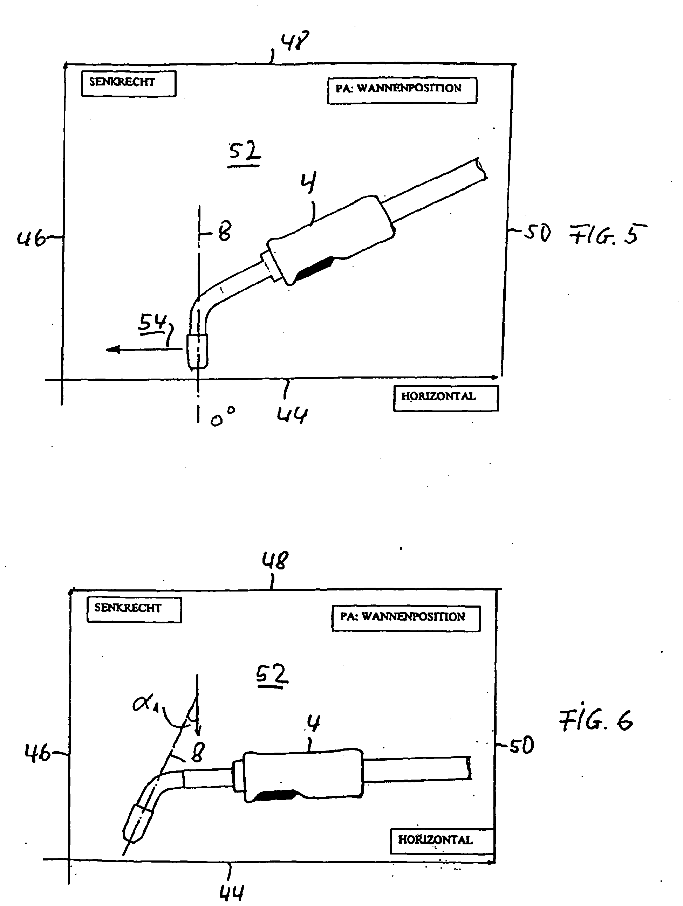

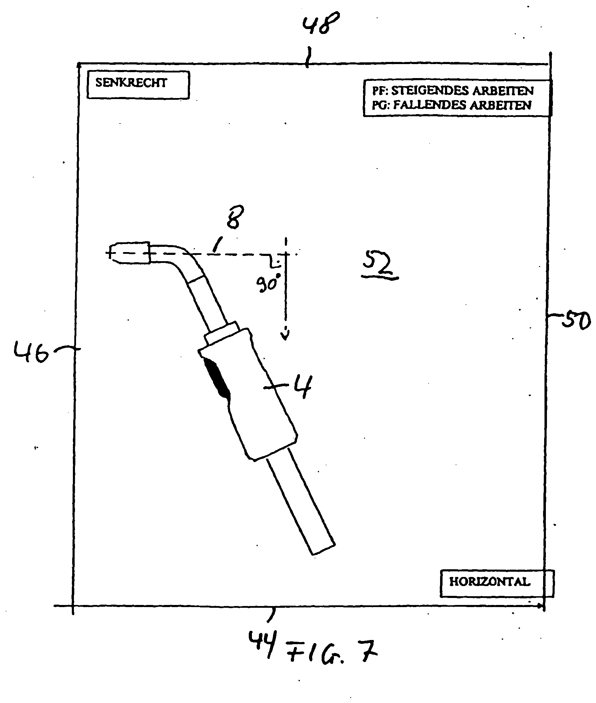

Die Funktionsweise der Vorrichtung wird nachfolgend anhand der Figuren 5 bis 9 näher erläutert.

Beispielhalber soll das Verschweißen von vier Platten 44, 46, 48, 50, die sich in Fig. 5 senkrecht zur Zeichenebene erstrecken, mit einer fünften Platte 52, die in Fig. 5 in der Zeichenebene liegt, beschrieben werden.

Zum Verschweißen der Platte 44 mit der Platte 52 wird der Schweißkopf 4 in Fig. 5 nach links in Richtung eines Pfeiles 54 entlang des Stoßbereiches der Platten 44, 52 bewegt, wobei sich zwischen dem in Fig. 5 nicht dargestellten Schweißdraht und den miteinander zu verschweißenden Platten 44, 52 ein Lichtbogen bildet, der zur Bildung einer Schweißverbindung in Form einer Schweißnaht führt. Die Quelle 6 führt hierbei dem Schweißkopf 4 einen Schweißstrom mit einer Amplitude von beispielsweise 150 A zu. Während des Schweißvorganges fühlt der erste Sensor 14 die Drehlage des Schweißkopfes 4 relativ zu der in Fig. 1 und 5 dargestellten Bezugslage ab, während der zweite Sensor 16 die Geschwindigkeit der Bewegung des Schweißkopfes 4 in Richtung des Pfeiles 54 abfühlt.

Wird anhand des Ausgangssignales des zweiten Sensors 16 festgestellt, daß sich die Geschwindigkeit, mit der der Schweißkopf 4 von einem Werker in Richtung des Pfeiles 54 bewegt, erhöht wird, so wird ein entsprechendes Signal von der Steuereinheit 18 zu dem Steuergerät der Quelle 6 übertragen, die daraufhin zur Konstanthaltung der Streckenenergie die Amplitude des Schweißstromes erhöht. Wird demgegenüber durch den zweiten Sensor 16 festgestellt, daß sich die Geschwindigkeit, mit der der Schweißkopf 4 in Richtung des Pfeiles 54 bewegt wird, verringert, so übermittelt die Steuereinheit 18 dem Steuergerät 20 ein entsprechendes Signal, das daraufhin die Amplitude des von der Quelle 6 bereitgestellten Schweißstromes verringert. Auf diese Weise ist sichergestellt, daß die Streckenenergie während des Schweißvorganges konstant bleibt.

Wird die Drehlage des Schweißkopfes 4 beispielsweise um eine senkrecht zur Zeichenebene verlaufende Achse verändert, wie in Fig. 6 dargestellt, so wird diese Änderung der Drehlage durch den ersten Sensor 14 erfaßt und ein entsprechendes Signal durch die Steuereinheit 18 an das Steuergerät 20 übermittelt. Das Steuergerät 20 kann daraufhin wenigstens eine Kenngröße des Schweißverfahrens, beispielsweise wiederum die Amplitude des Schweißstromes, beeinflussen, um ein optimales Schweißergebnis zu erhalten.

Wird der Schweißkopf 4 erneut um eine senkrecht zur Zeichenebene verlaufende Achse gedreht, um zwischen der Platte 46 und der Platte 52 eine Schweißnaht zu bilden und wird dementsprechend in der Steigposition geschweißt, so wird die Änderung der Drehlage durch den ersten Sensor 14 erfaßt, und die Steuereinheit 18 übermittelt dem Steuergerät 20 der Quelle 6 ein entsprechendes Signal. Da beim Schweißen in der Steigposition mit einer geringeren Geschwindigkeit geschweißt wird als beim Schweißen in der Wannenposition, verringert das Steuergerät 20 daraufhin den Schweißstrom, der dann beispielsweise 90 A betragen kann. Wird durch den zweiten Sensor 16 festgestellt, daß sich der Schweißkopf nicht mit einer im wesentlichen konstanten Geschwindigkeit entlang der zu bildenden Schweißnaht bewegt, sondern in einer intermittierenden Bewegung mit zwischenzeitigem Stillstand und darauffolgender Beschleunigung, so kann das Steuergerät 20 den Schweißstrom so steuern, daß während einer Bewegung des Schweißkopfes 4 mit relativ hoher Geschwindigkeit ein relativ hoher Schweißstrom und während einer Bewegung des Schweißkopfes 4 mit relativ geringer Geschwindigkeit, insbesondere beim Stillstand, ein verringerter Schweißstrom verwendet wird.

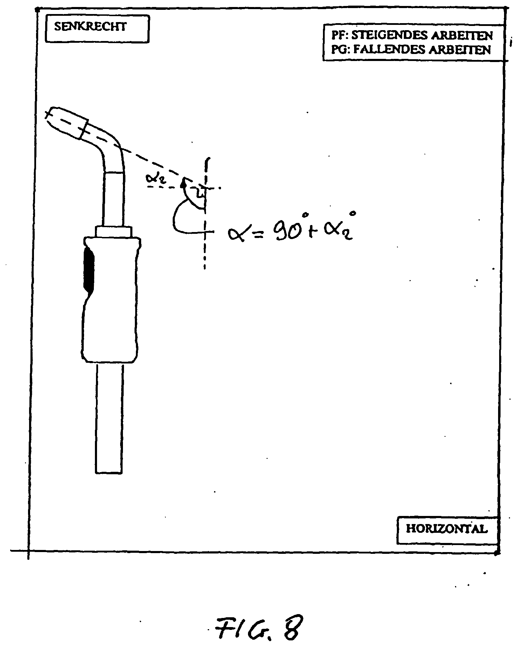

Wird der Schweißkopf 4 erneut um eine senkrecht zur Zeichenebene verlaufende Achse gedreht, wie in Fig. 8 dargestellt, so kann das Steuergerät 20 in Abhängigkeit von dem Ausgangssignal der Sensoren 14, 16 und einem sich daraus ergebenden Ausgangssignal der Steuereinheit 18 erneut wenigstens eine Kenngröße des Schweißverfahrens, beispielsweise die Amplitude des Schweißstromes beeinflussen, beispielsweise erhöhen.

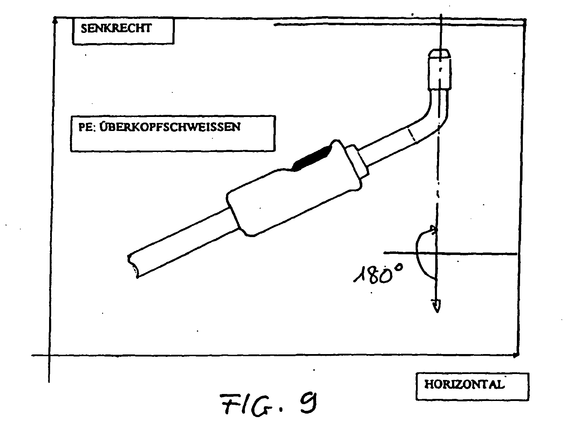

Wird anhand des Ausgangssignales des ersten Sensors 14 festgestellt, daß der Schweißkopf 4 erneut um eine senkrecht zur Zeichenebene verlaufende Achse gedreht wurde und nunmehr die in Fig. 9 dargestellte Drehlage einnimmt, in der der Schweißkopf 4 gegenüber der in Fig. 5 dargestellten Bezugslage um 180° gedreht ist, so ergibt sich daraus, daß der Schweißkopf 4 zum Schweißen in Überkopfposition verwendet wird. In Abhängigkeit von einem entsprechenden Ausgangssignal des ersten Sensors 14 und einem sich daraus ergebenden Ausgangssignal der Steuereinheit 18 verringert das Steuergerät 20 der Quelle 6 die Amplitude des Schweißstromes daraufhin so weit, daß das Material der miteinander zu verschweißenden Platten 48, 52 gerade noch so weit verflüssigt wird, wie dies zur Bildung einer Schweißverbindung erforderlich ist, gleichzeitig ein Herabtropfen des Materiales jedoch verhindert ist. Beispielsweise kann die Amplitude des Schweißstromes beim Schweißen in Überkopfposition auf 80 A verringert werden.

In hierzu entsprechender Weise kann der Schweißstrom erneut erhöht werden, wenn anhand des Ausgangssignales des ersten Sensors 14 festgestellt wird, daß der Schweißkopf 4 erneut gedreht wird, um in Fallposition eine Schweißnaht zwischen der Platte 50 und der Platte 52 zu bilden.

Somit können die zur Verbindung der Platten 44, 46, 48, 50 erforderlichen Schweißnähte ohne Aussetzen des Lichtbogens gebildet werden, wobei die Beeinflussung von Kenngrößen des Schweißverfahrens, bei dem beschriebenen Ausführungsbeispiel des Schweißstromes, automatisch durch die Steuereinheit 18 bzw. das Steuergerät 20 in Abhängigkeit von Ausgangssignalen der Sensoren 14, 16 der Sensormittel erfolgt, ohne daß hierfür ein manueller Eingriff eines Werkers erforderlich ist. Das Steuergerät 20 kann hierbei so vorprogrammiert sein, daß das Schweißergebnis in Abhängigkeit von der jeweiligen Lage bzw. Lageänderung des Schweißkopfes 4 optimiert wird.

Da die Beeinflussung von Kenngrößen des Schweißverfahrens automatisch erfolgt, ist ein manueller Eingriff eines Werkers grundsätzlich nicht erforderlich. Um einem Werker einen manuellen Eingriff zu ermöglichen, kann ggf. eine Bedieneinrichtung 56 (vgl. Fig. 1), beispielsweise zur manuellen Anwahl bestimmter Schweißprogramme, vorgesehen sein, und das jeweils angewählte Schweißgrogramm kann über eine Anzeigeeinrichtung 58 angezeigt werden.

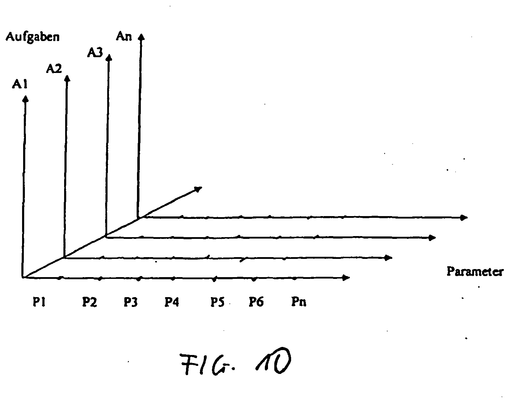

Fig. 10 stellt ein Kennlinienfeld dar, wobei A1 bis An unterschiedliche Schweißaufgaben bezeichnen und P1 bis Pn unterschiedliche Positionen des Schweißkopfes bezeichnen. In diesem Kennlinienfeld kann die Zuordnung von Werten der Kenngrößen in Abhängigkeit von der jeweiligen Schweißaufgabe und in Abhängigkeit von der jeweiligen Position des Schweißkopfes erfolgen, wobei die Schweißaufgaben sich beispielsweise hinsichtlich der Dicke und/oder des Materials der miteinander zu verschweißenden Werkstücke unterscheiden können.

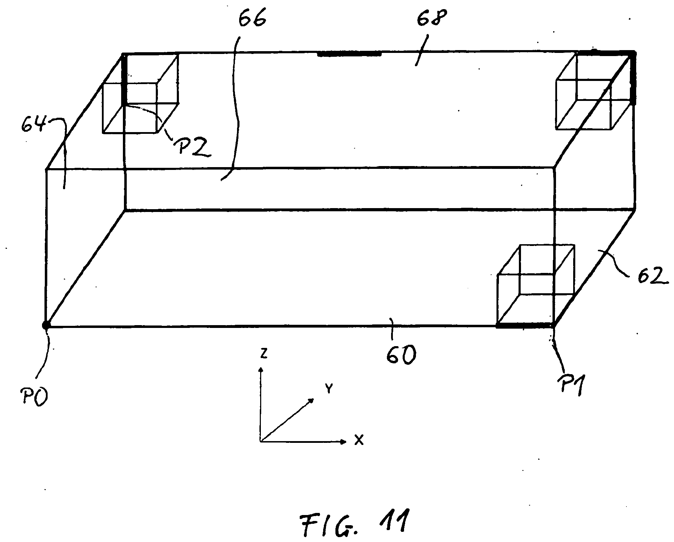

In Fig. 11 ist stark schematisiert ein Behälter dargestellt, der aus miteinander zu verschweißenden Blechen gebildet wird.

Vor der Durchführung von Schweißvorgängen mittels der in Fig. 11 nicht dargestellten Schweißvorrichtung 2 wird diese zunächst an einen Referenzpunkt P0 bewegt. Im Rahmen eines Lernmodus der Schweißvorrichtung 2 ist vorher festgelegt und in einem Speicher abgespeichert worden, daß ausgehend von einem Punkt P1 eine erste Schweißaufgabe, nämlich das Bilden einer Schweißnaht in Wannenlage zwischen einem Bodenblech 60 und einem vertikalen Seitenblech 62, ausgehend von einem Punkt P2 eine zweite Schweißaufgabe, nämlich das Bilden einer Schweißnaht als Steignaht zwischen einem vertikalen Seitenblech 64 und einem vertikalen Seitenblech 66 und ausgehend von einem Punkt P3 eine dritte Schweißaufgabe, nämlich das Bilden einer Schweißnaht als Überkopfnaht zwischen dem vertikalen Seitenblech 66 und einem oberen Blech 68 auszuführen ist.

Hierzu wird die Schweißvorrichtung 2 zunächst an den Referenzpunkt P0 bewegt und das Erreichen des Referenzpunktes P0 durch Betätigen beispielsweise einer Taste der Bedieneinrichtung 56 den Steuerungsmitteln angezeigt. Wird die Schweißvorrichtung 2 ausgehend von dem Referenzpunkt P0 bewegt, so erfassen die Sensormittel die Lage und/oder Lageänderungen der Schweißvorrichtung im dreidimensionalen Raum. Wird die Schweißvorrichtung beispielsweise entlang der x-Achse bewegt, so wird diese Bewegung durch die Sensormittel erfaßt. Beim Erreichen des Punktes P1 ordnen die Steuermittel den Kenngrößen des Schweißverfahrens Werte zu, die an die dort auszuführende Schweißaufgabe, nämlich das Schweißen in Wannenlage, optimal angepaßt sind. Der Werker kann somit die Schweißnaht zwischen dem vertikalen Seitenblech 62 und dem Bodenblech 60 erzeugen.

Wird die Schweißvorrichtung daran anschließend in Richtung auf den Punkt P2 bewegt, so fühlen die Sensormittel erneut die Lage des Schweißkopfes der Schweißvorrichtung 2 bzw. Lageänderungen im dreidimensionalen Raum ab. Ein Erreichen des Punktes P2 wird den Steuerungsmitteln durch entsprechende Ausgangssignale der Sensormittel angezeigt, wobei die Steuerungsmittel den Kenngrößen des Schweißverfahrens daraufhin Werte zuordnen, die an die ausgehend von dem Punkt P2 auszuführende Schweißaufgabe, nämlich das Bilden einer Schweißnaht als Steignaht zwischen den Blechen 64, 68 optimal angepaßt sind. Daran anschließend kann der Werker die entsprechende Schweißnaht bilden.

Wird die Schweißvorrichtung 2 daran anschließend in Richtung auf den Punkt P3 bewegt, so fühlen die Sensormittel erneut die Lage des Schweißkopfes 4 der Schweißvorrichtung 2 bzw. Lageänderungen im dreidimensionalen Raum ab. Zeigen Ausgangssignale der Sensormittel den Steuerungsmitteln an, daß sich der Schweißkopf 4 der Schweißvorrichtung 2 an dem Punkt P3 befindet, so ordnen die Steuerungsmittel daraufhin den Kenngrößen des Schweißverfahrens Werte zu, die an die dann auszuführende Schweißaufgabe, nämlich das Bilden einer Schweißnaht in Überkopfposition, optimal angepaßt sind. Daran anschließend kann der Werker die entsprechende Schweißnaht bilden.

Auf diese Weise ist eine vollautomatische Lageerkennung in Bezug auf die Lage des Schweißkopfes 4 der Schweißvorrichtung 2 und eine vollautomatische Anpassung der Werte der Kenngrößen des Schweißverfahrens an die jeweils auszuführende Schweißaufgabe ausgeführt. Hierbei können die Kenngrößen des Schweißverfahrens herangezogen und beeinflußt werden. So ist es beispielsweise möglich, nicht nur die jeweilige Lage des Schweißkopfes 4 in die Beeinflussung der Kenngrößen einzubeziehen, sondern beispielsweise auch die Dicke der miteinander zu verschweißenden Bleche. Hinsichtlich zweier ähnlicher Schweißaufgaben, die an unterschiedlichen Stellen auszuführen sind, jedoch sich beispielsweise jeweils auf ein Schweißen in Wannenlage beziehen, kann bei der Durchführung der ersten Schweißaufgabe beispielsweise mit einem Schweißstrom gearbeitet werden, der an eine Verschweißung dickerer Bleche miteinander angepaßt ist, während bei der zweiten Schweißaufgabe mit einem Schweißstrom gearbeitet werden kann, der an eine Verschweißung dünnerer Bleche angepaßt ist. Auf diese Weise ergibt sich eine besonders hohe Flexibilität hinsichtlich der Beeinflussung der Kenngrößen.

## Patentansprüche

1. Vorrichtung zur Ausführung eines Schweißverfahrens, bei dem die Schweißenergie über einen Schweißstrom, bzw. eine Schweißspannung zugeführt wird, umfassend:
einen Schweißkopf zur Abgabe von Schweißenergie an zu verschweißende Werkstücke, wobei
Sensormittel zum Abfühlen der Lage und/oder von Lageänderungen des Schweißkopfes (4) relativ zu einem Bezugspunkt im Raum oder relativ zu einer Bezugslage des Schweißkopfes (4) und/oder zu den zu bearbeitenden, insbesondere zu verschweißenden Werkstücken, derart, dass wenigstens eine Kenngröße des Schweißverfahrens, in Abhängigkeit von der abgefühlten Lage und/oder Lageänderung beeinflussbar ist,
wobei die Sensormittel wenigstens einen Sensor (14) zum Abfühlen einer Rotationslage und/oder von rotativen Lageänderungen des Schweißkopfes (4) sowie wenigstens einen Sensor (16) zum Abfühlen translatorischer Lageänderungen des Schweißkopfes (4) aufweisen, und wobei
mit den Sensormitteln verbundene Steuermittel (18) zur selbsttätigen Steuerung und/oder Regelung wenigstens einer Kenngröße des Schweißverfahrens, in Abhängigkeit von der durch die Sensormittel abgefühlten Lage und/oder Lageänderung des Schweißkopfes (4) vorgesehen sind, die wenigstens eine Kenngröße zeitkontinuierlich so beeinflussen, dass das Verfahren unterbrechungsfrei durchführbar ist, wobei die in Abhängigkeit von einer durch die Sensormittel abgefühlten Lage und/oder
Lageänderung des Schweißkopfes (4) beeinflussbaren Kenngrößen des Schweißverfahrens wenigstens
- die Amplitude und/oder
- die Signalform, insbesondere Pulsform, und/oder
- die Pulsmodulation
des Schweißstromes und/oder der Schweißspannung umfassen.

2. Vorrichtung nach Anspruch 1, **dadurch gekennzeichnet, dass** die Steuermittel (18) mit einer den Schweißkopf (4) mit Schweißenergie versorgenden Schweißenergie-Quelle (6) zur Ansteuerung derselben verbunden sind, derart, dass wenigstens eine Kenngröße des Schweißverfahrens in Abhängigkeit von der durch die Sensormittel abgefühlten Lage und/oder Lageänderung des Schweißkopfes (4) an der Schweißenergie-Quelle (6) steuer- und/oder regelbar ist.

3. Vorrichtung nach Anspruch 1, **dadurch gekennzeichnet,**
**dass** einer der Sensoren (14, 16) die Geschwindigkeit und/oder Beschleunigung einer translatorischen und/oder rotativen Bewegung des Schweißkopfes (4) abfühlt.

4. Vorrichtung nach einem der vorhergehenden Ansprüche, **dadurch gekennzeichnet,**
**dass** der Schweißkopf (4) während des Bearbeitungsvorganges von Hand oder durch eine Handhabungseinrichtung, insbesondere einen Schweißroboter führbar ist.

5. Vorrichtung nach einem der Ansprüche 1 bis 4, **dadurch gekennzeichnet, dass** das Schweißverfahren ein Widerstands-Schweißverfahren ist.

6. Vorrichtung nach einem der Ansprüche 1 bis 4, **dadurch gekennzeichnet, dass** das Schweißverfahren ein Lichtbogen-Schweißverfahren ist.

7. Vorrichtung nach Anspruch 6, **dadurch gekennzeichnet, dass** das Schweißverfahren ein Schutzgas-Lichtbogen-Schweißverfahren ist.

8. Vorrichtung nach Anspruch 5, **dadurch gekennzeichnet, dass** die in Abhängigkeit von der durch die Sensormittel abgefühlten Lage bzw. Lageänderung des Schweißkopfes (4) beeinflussbaren Kenngrößen des Schweißverfahrens eine Anpresskraft wenigstens einer Schweißelektrode des Schweißkopfes an eines der zu verschweißenden Werkstücke umfassen.

9. Vorrichtung nach Anspruch 8, **dadurch gekennzeichnet, dass** die in Abhängigkeit von der durch die Sensormittel abgefühlten Lage bzw. Lageänderung des Schweißkopfes (4) beeinflussbaren Kenngrößen des Schweißverfahrens eine Zuführgeschwindigkeit wenigstens eines an dem Schweißkopf (4) geführten Schweißdrahtes (8) umfassen.

10. Vorrichtung nach einem der Ansprüche 1 bis 4, **dadurch gekennzeichnet,**
**dass** die Vorrichtung ein Schweißbrenner ist.

11. Vorrichtung nach einem der vorhergehenden Ansprüche, **dadurch gekennzeichnet, dass** wenigstens ein Sensor (14, 16) der Sensormittel an dem Schweißkopf (4) angeordnet, insbesondere in den Schweißkopf (4) integriert ist.

12. Vorrichtung nach einem der vorhergehenden Ansprüche, **dadurch gekennzeichnet, dass** wenigstens ein Sensor der Sensormittel am Körper eines die Vorrichtung (2) benutzenden Werkers, insbesondere an dessen Hand oder Arm, tragbar ist.

13. Vorrichtung nach einem der vorhergehenden Ansprüche, **dadurch gekennzeichnet, dass** die Bezugslage des Schweißkopfes (4) und/oder ein Bezugspunkt im Raum durch einen Werker und/oder durch die Steuermittel (18) wählbar ist.

14. Vorrichtung nach einem der vorhergehenden Ansprüche, **dadurch gekennzeichnet, dass** die Steuermittel in Abhängigkeit von der gewählten Bezugslage und/oder der durch die Sensormittel abgefühlten Lage und/oder Lageänderungen des Schweißkopfes den Kenngrößen des Verfahrens vorbestimmte Werte zuordnen.

15. Vorrichtung nach einem der vorhergehenden Ansprüche, **dadurch gekennzeichnet, dass** die Steuermittel Kenngrößen des Verfahrens während des Bearbeitungsvorganges selbsttätig steuern bzw. regeln.

16. Vorrichtung nach einem der vorhergehenden Ansprüche, **gekennzeichnet durch** eine Anzeigeeinrichtung (58) zur Anzeige eines durch die Steuermittel in Abhängigkeit von Ausgangssignalen der Sensormittel gewählten Betriebsmodus der Vorrichtung.

17. Vorrichtung nach einem der vorhergehenden Ansprüche, **gekennzeichnet durch** eine Bedieneinrichtung (56) zur manuellen Auswahl eines Betriebsmodus der Vorrichtung.

18. Vorrichtung nach einem der vorhergehenden Ansprüche, **dadurch gekennzeichnet, dass** die Sensormittel die räumliche Lage und/oder räumliche Lageänderungen des Schweißkopfes (4) im dreidimensionalen Raum erfassen.

19. Vorrichtung nach einem der vorhergehenden Ansprüche, **dadurch gekennzeichnet,**
**dass** unterschiedlichen Lagen des Schweißkopfes (4) unterschiedliche Werte wenigstens einer Kenngröße des Schweißverfahrens zugeordnet sind und dass die Steuermittel der jeweiligen Kenngröße in Abhängigkeit von der durch die Sensormittel, abgefühlten Lage des Schweißkopfes einen vorbestimmten Wert zuordnen.

20. Vorrichtung nach einem der vorhergehenden Ansprüche, **dadurch gekennzeichnet,**
**dass** wenigstens einer ersten Lage des Schweißkopfes (4) ein erster Wert wenigstens einer Kenngröße und wenigstens einer zweiten Lage des Schweißkopfes (4) ein zweiter Wert der Kenngröße oder der Kenngrößen zugeordnet ist und dass die Steuermittel der Kenngröße den ersten Wert zuordnen, wenn ein Ausgangssignal der Sensormittel anzeigt, dass sich der Schweißkopf (4) in der ersten Lage befindet, und der Kenngröße den zweiten Wert zuordnen, wenn ein Ausgangssignal der Sensormittel anzeigt, dass sich der Schweißkopf (4) in der zweiten Lage befindet.

## Claims

1. Device for carrying out a welding process, in which the welding energy is provided via a welding current respectively a welding voltage, comprising:
a welding head for providing welding energy to workpieces to be welded,
wherein sensor means for sensing the position and/or positional changes of the welding head (4) relative to a reference point in space or relative to a reference position of the welding head (4) and/or to the workpieces to be processed, in particular welded, in such a manner
that at least one characteristic value of the welding process, can be influenced as a function of the sensed position and/or change in position,
wherein the sensor means comprise at least one sensor (14) for sensing a rotational position and/or changes in rotational position of the welding head (4) and at least one sensor (16) for sensing translatory changes in position of the welding head (4), and wherein
control means (18) connected to the sensor means are provided for the automatic control and/or regulation of at least one characteristic value of the welding process, as a function of the position and/or change in position of the welding head (4) sensed by the sensor means, which control means influence the at least one characteristic value in a time-continuous manner such that the process can be carried out without interruption,
wherein the characteristic values of the welding process which can be influenced by a position and/or change in position of the welding head (4) picked up by the sensor means comprise at least
- the amplitude and/or
- the signal shape, in particular pulse shape, and/or
- the pulse modulation
of the welding current and/or the welding voltage.

2. Device according to claim 1, **characterized in that** the control means (18) are connected to a welding-energy source (6) that provides welding energy to the welding head (4) for driving the latter, such that at least one characteristic value of the welding process can be controlled and/or regulated as a function of the position and/or change in position of the welding head (4) picked up by the sensor means at the welding energy source (6).

3. Device according to claim 1, **characterized in that** one of the sensors (14, 16) picks up the speed and/or acceleration of a translatory and/or a rotational movement of the welding head (4).

4. Device according to one of the preceding claims, **characterized in that** the welding head (4) can be guided during the processing operation by hand or by a manipulating device, in particular a welding robot.

5. Device according to one of claims 1 to 4, **characterized in that** the welding process is a resistance welding process.

6. Device according to one of claims 1 to 4, **characterized in that** the welding process is an arc welding process.

7. Device according to claim 6, **characterized in that** the welding process is an inert gas arc welding process.

8. Device according to claim 5, **characterized in that** the characteristic values of the welding process, which can be influenced as a function of the position or change in position of the welding head (4) picked up by the sensor means, include a contact pressure of at least one welding electrode of the welding head on one of the workpieces to be welded.

9. Device according to claim 8, **characterized in that** the characteristic values of the welding process, which can be influenced as a function of the position or change in position of the welding head (4) picked up by the sensor means, include a feed speed of at least one welding rod (8) guided on the welding head (4).

10. Device according to one of claims 1 to 4, **characterized in that** the device is a welding torch.

11. Device according to one of the preceding claims, **characterized in that** at least one sensor (14, 16) of the sensor means is arranged on the welding head (4), in particular is integrated into the welding head (4).

12. Device according to one of the preceding claims, **characterized in that** at least one sensor of the sensor means can be worn on the body of a worker using the device (2), in particular on the hand or arm.

13. Device according to one of the preceding claims, **characterized in that** the reference position of the welding head (4) and/or a reference point in space can be selected by a worker and/or by the control means (18).

14. Device according to one of the preceding claims, **characterized in that** the control means assigns, as a function of the selected reference position and/or the position and/or changes in position of the welding head picked up by the sensor means, predetermined values to the characteristic values of the process.

15. Device according to one of the preceding claims, **characterized in that** the control means automatically control or regulate the characteristic values of the process during the processing operation.

16. Device according to one of the preceding claims, **characterized by** a display device (58) for displaying an operating mode of the device selected by the control means as a function of the output signals of the sensor means.

17. Device according to one of the preceding claims, **characterized by** an operating device (56) for the manual selection of an operating mode of the device.

18. Device according to one of the preceding claims, **characterized in that** the sensor means detect the spatial position and/or spatial changes in position of the welding head (4) in three-dimensional space.

19. Device according to one of the preceding claims, **characterized in that** different positions of the welding head (4) are assigned different values of at least one characteristic value of the welding process, and **in that** the control means assign a predetermined value to the respective characteristic value as a function of the position of the welding head picked up by the sensor means.

20. Device according to one of the preceding claims, **characterized in that** to at least one first position of the welding head (4) a first value of at least one characteristic value is assigned and to at least one second position of the welding head (4) a second value of the characteristic value or the characteristic values is assigned, and **in that** the control means assign the first value to the characteristic value when an output signal of the sensor means displays that the welding head (4) is in the first position, and assign the second value to the characteristic value when an output signal of the sensor means displays that the welding head (4) is in the second position.

## Revendications

1. Dispositif pour la réalisation d'un procédé de soudage, dans lequel l'énergie de soudage est delivré par un courant de soudage et/ou d'une tension de soudage, comprenant :
une tête de soudage pour délivrer de l'énergie de soudage à des pièces à souder,
pendant que
des moyens de capteur pour détecter la position et/ ou des changements de position de la tête de soudage (4) et/ou d'un point de référence dans l'espace par rapport à une position de référence de la tête de soudage (4) et/ou par rapport aux pièces à travailler, en particulier à souder, de telle sorte qu'au moins un paramètre caractéristique du procédé de soudage, peut être influencé en fonction de la position et/ou du changement de position détectés;
pendant que les moyens de capteur présentent au moins un capteur (14) pour détecter une position de rotation et/ou des changements de position en rotation de la tête de soudage (4) et au moins un capteur (16) pour détecter des changements de position en translation de la tête de soudage (4),
et pendant que des moyens de commande (18) reliés aux moyens de capteur pour une commande et/ou une régulation automatiques d'au moins un paramètre caractéristique du procédé de soudage, en fonction de la position et/ou du changement de position de la tête de soudage (4), détéctes par les moyens de capteur, en ce que les moyens de commande influencent le ou les paramètres caractéristiques de telle sorte que le procédé peut être exécuté sans interruption, pendant que des paramètres caractéristiques du procédé de soudage pouvant être influencés en fonction d'une position et/ou d'un changement de position de la tête de soudage (4), détectés par les moyens de capteur, comprennent au moins
- l'amplitude et/ou
- la forme de signal, en particulier la forme d'impulsion, et/ ou
- la modulation d'impulsion
du courant de soudage et/ou de la tension de soudage.

2. Dispositif selon la revendication 2 ou 3, **caractérisé en ce que** les moyens de commande (18) sont reliés à une source d'énergie de soudage (6) alimentant la tête de soudage (4) en énergie de soudage pour le pilotage de celle-ci, de telle sorte qu'au moins un paramètre caractéristique du procédé de soudage peut être commandé et/ou régulé au niveau de la source d'énergie de soudage (6) en fonction de la position et/ou du changement de position de la tête de soudage (4) détectés par les moyens de capteur.

3. Dispositif selon la revendication 1, **caractérisé par** l'un des capteurs (14, 16) détecte la vitesse et/ou l'accélération d'un mouvement en translation et/ou en rotation de la tête de soudage (4).

4. Dispositif selon l'une quelconque des revendications précédentes, **caractérisé en ce que** la tête de travail (4) peut être guidée pendant l'opération de traitement manuellement ou par un dispositif de manipulation, en particulier par un robot de soudage.

5. Dispositif selon l'une quelconque des revendications 1 à 4, **caractérisé en ce que** le procédé de soudage est un procédé de soudage par résistance.

6. Dispositif selon l'une quelconque des revendications 1 à 4, **caractérisé en ce que** le procédé de soudage est un procédé de soudage à l'arc.

7. Dispositif selon la revendication 6, **caractérisé en ce que** le procédé de soudage est un procédé de soudage à l'arc sous gaz protecteur.

8. Dispositif selon la revendication 5, **caractérisé en ce que** les paramètres caractristiques du procédé de soudage pouvant être influencés en fonction de la position et/ou du changement de position de la tête de soudage (4), détectés par les moyens de capteur, comprennent une force de pression d'au moins une électrode de soudage de la tête de soudage contre l'une des pièces à souder.

9. Dispositif selon la revendication 8, **caractérisé en ce que** les paramètres caractéristiques du procédé de soudage pouvant être influencés en fonction de la position et/ou du changement de position de la tête de soudage (4), détectés par les moyens de capteur, comprennent une vitesse d'amenée d'au moins un fil d'apport (8) guidé au niveau de la tête de soudage (4).

10. Dispositif selon l'une quelconque des revendications 1 à 4, **caractérisé en ce que** le dispositif est un chalumeau à souder.

11. Dispositif selon l'une quelconque des revendications précédentes, **caractérisé en ce qu'**au moins un capteur (14, 16) des moyens de capteur est agencé au niveau de la tête de soudage (4), en particulier intégré dans la tête de soudage (4).

12. Dispositif selon l'une quelconque des revendications précédentes, **caractérisé en ce qu'**au moins un capteur des moyens de capteur peut être porté sur le corps d'un ouvrier utilisant le dispositif (2), en particulier au niveau de la main ou du bras de celui-ci.

13. Dispositif selon l'une quelconque des revendications précédentes, **caractérisé en ce que** la position de referen ce de la tête de soudage (4) et/ou un point de réféence dans l'espace peuvent être choisis par un ouvrier et/ou par les moyens de commande (18).

14. Dispositif selon l'une quelconque des revendications précédentes, **caractérisé en ce que** les moyens de commande attribuent aux paramètres caractérstiques du procédé des valeurs prédéterminées, en fonction de la position de référence choisie et/ou de la position et/ou des changements de position de la tête de soudage, détectés par les moyens de capteur.

15. Dispositif selon l'une quelconque des revendications précédentes, **caractérisé en ce que** les moyens de commande commandent ou régulent automatiquement des paramètres caractéristiques du procédé pendant l'opération de traitement.

16. Dispositif selon l'une quelconque des revendications précédentes, **caractérisé par** un dispositif d'affichage (58) pour afficher un mode de fonctionnement du dispositif, choisi par les moyens de commande en fonction de signaux de sortie des moyens de capteur.

17. Dispositif selon l'une quelconque des revendications précédentes, **caractérisé par** un dispositif d'actionnement (56) pour la sélection manuelle d'un mode de fonctionnement du dispositif.

18. Dispositif selon l'une quelconque des revendications précédentes, **caractérisé en ce que** les moyens de capteur détectent la position spatiale et/ou les changements de position spatiale de la tête de soudage (4) dans l'espace tridimensionnel.

19. Dispositif selon l'une quelconque des revendications précédentes, **caractérisé en ce que** les moyens de commande attribuent aux paramètres caractérstiques du procédé des valeurs prédéterminées, en fonction de la position de référence choisie et/ou de la position et/ou des changements de position de la tête de soudage (4), détectés par les moyens de capteur.

20. Dispositif selon l'une quelconque des revendications précédentes, **caractérisé en ce qu'**au moins à une première position de la tête de travail (4), une première valeur d'au moins un paramètre caractéristique est attribuée, et **en ce qu'**au moins à une deuxième position de la tête de travail (4), une deuxième valeur du ou des paramètres caractéristiques est attribuée, et **en ce que** les moyens de commande attribuent la première valeur au paramètre caractéristique lorsqu'un signal de sortie des moyens de capteur indique que la tête de travail (4) se trouve dans la première position, et attribuent la deuxième valeur au paramètre caractéristique lorsqu'un signal de sortie des moyens de capteur indique que la tête de travail (4) se trouve dans la deuxième position.
